# EUROPÄISCHE PATENTSCHRIFT

(11) **EP 0 445 528 B1**
(45) Veröffentlichungstag und Bekanntmachung des Hinweises auf die Patenterteilung: **01.09.1993**
(21) Anmeldenummer: 91101419.9
(22) Anmeldetag: 04.02.1991
(51) Int. Cl.: B60N 2/16

(54) **Fahrzeugsitz mit einem Sitzträger, an dem eine Rückenlehne befestigt ist und einem Sitzkissen**
Vehicle seat with a seat support, to which a backrest is fixed, and with a seat cushion
Siège de véhicule avec un support de siège, auquel un dossier est fixé, et avec un coussin de siège

(30) Priorität: 09.03.1990 DE 4007490
(43) Veröffentlichungstag der Anmeldung: 11.09.1991
(73) Patentinhaber: C. Rob. Hammerstein GmbH, D-42699 Solingen (DE)
(72) Erfinder: Bauer, Heinz, W-5650 Solingen 11 (DE); Becker, Burckhard, W-5650 Solingen 11 (DE); Frohnhaus, Ernst-Reiner, W-5650 Solingen 11 (DE)
(74) Vertreter: Bauer, Wulf, Dr.

(56) Entgegenhaltungen:
- DE-A- 3 400 092
- DE-A- 3 841 711
- FR-A- 2 433 433

## Beschreibung

Die Erfindung bezieht sich auf einen Fahrzeugsitz mit einem Sitzträger, der zum einen über je einen vorderen und je einen hinteren Parallelogrammarm mit einer Sitzschiene einer Längsführung gelenkverbunden ist und zum anderen eine Rückenlehne trägt.

Derartige Sitzverstellungen mit Parallelogrammkinematik sind ansich bekannt, beispielsweise aus der DE-A-34 00 092, DE-A-27 15 640 oder DE-A-29 50 354. Zur Sperrung des Gelenkvierecks und damit Einstellung der Höhe des Sitzträgers über der Sitzschiene ist eine Einstellvorrichtung vorgesehen, die ein Gelenk eines Parallelogrammarmes wahlweise freigibt oder sperrt. Der Sitzträger kann zwischen einer tiefliegenden, hinteren Endposition und einer höherliegenden, weiter vorn befindlichen Position beliebig eingestellt werden.

Über die Längsführung ist der Fahrzeugsitz zudem gegenüber der Bodengruppe des Fahrzeugs längsverschiebbar angeordnet. Durch Betätigen sowohl dieser Längsführung als auch der Parallelogramm-Höhenverstellung des Sitzträgers kann eine ausschließliche Höhenverstellung, ohne Längsbewegung des Sitzträgers, erfolgen.

Die Erfindung hat sich die Aufgabe gestellt, die Kinematik des vorbekannten Fahrzeugsitzes zu verbessern und insbesondere eine zusätzliche Verstellung der Höhe der Sitzvorderkante zu ermöglichen. Gelöst wird diese Aufgabe durch einen Fahrzeugsitz mit den Merkmalen des Patentanspruchs 1.

Im Gegensatz zum Stand der Technik trägt der Sitzträger nicht unmittelbar das Sitzkissen, vielmehr dient er der Lagerung einer separaten Kissenschale, die ihrerseits das Sitzkissen trägt. Diese Kissenschale ist im Bereich ihrer Vorderkante beidseitig über je ein Gelenkhebelpaar mit der Sitzschiene gelenkverbunden, einem Gelenk dieses Hebelpaares ist eine Einstellvorrichtung für die Höhe der Sitzvorderkante zugeordnet. Bei gesperrter Parallelogrammkinematik des Sitzträgers wird durch die Kissenschale, das Gelenkhebelpaar und die genannte, gesperrte Parallelogrammanordnung ein zweites Gelenkviereck gebildet. Insgesamt wird durch nur drei Einstellmöglichkeiten, nämlich die Einstellung des ersten Gelenkvierecks für die Höheneinstellung des Sitzträgers, des zweiten Gelenkvierecks für die Kissenneigungsverstellung (bzw. Höheneinstellung der Kissenvorderkante) und der Längsverschiebung in der Längsführung eine sehr vielfältige Einstellung des Fahrzeugsitzes erreicht. Das Sitzkissen kann in unterschiedlichen Höhen und mit unterschiedlichen Neigungen verstellt werden, wobei durch Anheben der Hinterkante des Sitzes mittels der Parallelogrammarme und entsprechendes Absenken der Sitzvorderkante durch das zweite Gelenkviereck die Sitzhinterkante stark angehoben werden kann und andererseits durch Hochstellen des zweiten Gelenkvierecks die Sitzvorderkante in ihre höchste Position gebracht werden kann. Durch gesteuerte Betätigung aller drei Einstellmechanismen, wobei die Steuerung vorzugsweise durch einen Computer erfolgt, können beliebige Sitzbewegungen, beispielsweise reines paralleles Anheben des Sitzkissens, Anheben nur der Sitzvorderkante, Anheben nur der Sitzhinterkante usw. durchgeführt werden. Dabei wird die Neigung der Rückenlehne bei den Einstellvorgängen nicht beeinflußt, dies liegt daran, daß die Rückenlehne mit dem Sitzträger verbunden ist und der Sitzträger durch das erste Gelenkviereck mit den zwei Parallelogrammarmen im wesentlichen parallel verstellt wird. In bekannter Weise kann eine separate Verstellung der Rückenlehne dadurch erfolgen, daß zwischen dem Sitzträger und der Rückenlehne ein einstellbarer Beschlag vorgesehen ist, beispielsweise ein Beschlag nach der DE-A-37 29 134.

Vorzugsweise liegen bei mittlerer Höheneinstellung des Sitzträgers die Gelenke der vorderen und der hinteren Parallelogrammarme auf Ebenen, die sich vor und unterhalb des Sitzes in einer Pollinie schneiden. Innerhalb des gesamten Einstellbereichs des ersten Gelenkvierecks verlaufen die beiden Parallelogrammarme stets nach hinten (in normaler Sitzrichtung gesehen) schräg ansteigend. Die genannten Ebenen schließen bei mittlerer Höheneinstellung des Sitzträgers vorzugsweise einen Winkel von 30 ° mit der Längsverstellvorrichtung ein, wobei horizontale Montage der Längsverstellvorrichtung auf der Bodengruppe angenommen ist. Vorzugsweise sind die beiden Parallelogrammarme im wesentlichen gleich lang, der hintere Parallelogrammarm kann eine um etwa 10 % größere Länge als der vordere Arm aufweisen. Ebenso ist der Abstand der unteren Gelenkpunkte der beiden Parallelogrammarme im wesentlichen gleich groß dem Abstand der oberen Gelenkpunkte, die oberen Gelenkpunkte können jedoch einen etwa 10 % größeren Abstand haben. Aufgrund der längeren Ausbildung wird insgesamt eine verstärkte Anhebung der Hinterkante des Sitzträgers erreicht.

Weiterhin liegen in bevorzugter Weiterbildung die Gelenke der oberen Arme der Gelenkhebelpaare auf einer Ebene, die ebenfalls durch die Pollinie verläuft. Dadurch verlaufen auch die oberen Arme der beiden Gelenkhebelpaare im gesamten Einstellbereich schräg nach oben und nach hinten hin ansteigend. Hierdurch wird eine günstige Kinematik auch des zweiten Gelenkvierecks erreicht.

Die Schwenkachse der Kissenschale befindet sich vorzugsweise in unmittelbarer Nähe und unterhalb der Vorderkante der Rückenlehne. Erreicht wird hierdurch, daß unabhängig von der Einstellung des zweiten Gelenkvierecks und einer dabei erfolgenden Neigungseinstellung um die Schwenkachse der Kissenschale der Abstand zwischen der Unterkante der Rückenlehne und der benachbarten Fläche des Sitzkissens praktisch ungeändert bleibt. Je weiter hinten die Schwenkachse der Kissenschale angeordnet ist, umso geringer wird der Effekt einer Neigungsverstellung des Sitzkissens bei Einstellung des zweiten Gelenkvierecks. Je stärker andererseits die Schwenkachse nach vorn verlagert wird, umso größer senkt sich die Hinterkante des Sitzkissens ab, wenn die Vorderkante angehoben wird. Die beschriebene, bevorzugte Anordnung der Schwenkachse etwas vor, jedoch unterhalb der Vorderkante der Rückenlehne ergibt insgesamt günstige kinematische Verhältnisse.

Vorzugsweise sind die Einstellvorrichtungen an denjenigen Gelenken der Arme bzw. Hebel vorgesehen, die mit der Sitzschiene gelenkverbunden sind, also beispielsweise am unteren Gelenk des hinteren Parallelogrammarms und am entsprechenden Gelenk des unteren Hebels des Gelenkhebelpaares. Dadurch können die entsprechenden Einstellvorrichtungen, insbesondere Elektromotore, fest der Sitzschiene der Längsführung zugeordnet werden. Gleiches gilt für die Einstellvorrichtung der Längsführung. Damit kann eine sogenannte Dreiblockantriebseinheit, also eine räumlich zusammengefaßte, miteinander verbundene Einheit aus drei einzelnen Antriebsvorrichtungen, wie sie typischerweise für Sitzverstellungen verwendet wird, benutzt werden.

Vorzugsweise befindet sich die Schwenkachse im Bereich der Längsmitte des Sitzträgers und etwa in gleicher Entfernung von den beiden oberen Gelenkachsen der Parallelogrammarme. Auch hierdurch werden günstige kinematische Verhältnisse erreicht.

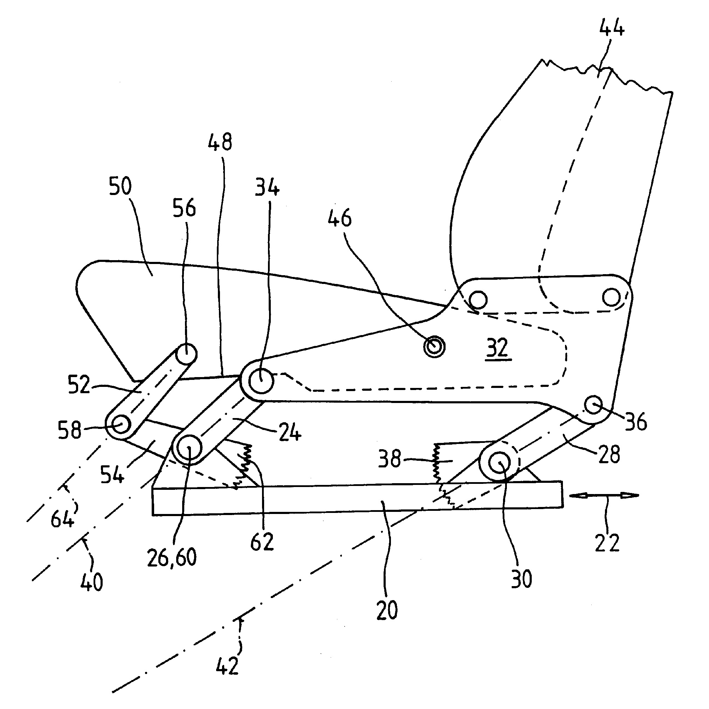

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. Diese zeigt in ihrer einzigen Figur eine Seitenansicht eines Fahrzeugsitzes (in prinzipieller Darstellung) mit einer Verstelleinrichtung nach der Erfindung.

In bekannter Weise ist der Fahrzeugsitz über eine Längsführung, von der in der Figur nur die Sitzschiene 20 gezeigt ist, mit der Bodengruppe (nicht dargestellt) eines Kraftfahrzeugs (nicht dargestellt) verbunden. Die Sitzschiene 20 kann in Richtung des Pfeils 22 gegenüber der Bodenschiene bzw. der Bodengruppe verschoben werden, diese Verstellung erfolgt im gezeigten Ausführungsbeispiel motorisch, Antriebsvorrichtungen für Längsführungen sind bekannt und müssen hier nicht näher erläutert werden.

An jeder der beiden Sitzschienen 20 der Längsverstellvorrichtung sind jeweils ein vorderer Parallelogrammarm 24 um eine Achse 26 frei angelenkt und ein hinterer Parallelogrammarm 28, um eine einstellbare Achse 30 schwenkbar angeordnet. Diese Paare Parallelogrammarme 24, 28 stützen einen Sitzträger 32, der um Achsen 34 bzw. 36 schwenkbar mit den oberen Endbereichen der Parallelogrammarme 24, 28 gelenkverbunden ist. Die Teile 20, 24, 28 und 32 bilden ein erstes Gelenkviereck, seine Gelenkpunkte sind durch die Achsen 26, 30, 34 und 36 gegeben.

Wie bereits erwähnt, ist das durch die Achse 30 gebildete Gelenk einstellbar. Hierzu ist mit dem hinteren Parallelogrammarm 28 eine Verstellschwinge 38 für Höheneinstellung drehfest verbunden. Sie hat - wie dargestellt - ein Zahnsegment, das in ansich bekannter Weise durch Eingriff mit einem motorisch angetriebenen, hier nicht dargestellten Ritzel im dargestellten Winkelbereich eine Winkeleinstellung der Verstellschwinge 38 ermöglicht.

In der gezeigten Ausführung ist die Länge des vorderen Parallelogrammarms 24, bestimmt durch den Abstand seiner Achsen 26, 34, etwa 12 % kürzer als die entsprechende Länge des hinteren Parallelogrammarms 28. Auch ist der Abstand der Achsen 26, 30 im wesentlichen gleich, jedoch etwa 7 % kürzer als der Abstand der Achsen 34, 36. Wie in der Figur durch strichpunktierte Linien angedeutet, liegen die beiden Achsen 26, 34 des vorderen Parallelogrammarms 24 auf einer Ebene 40 und die entsprechenden Achsen 30, 36 des hinteren Parallelogrammarms 28 auf einer Ebene 42. Diese Ebenen schneiden sich unterhalb und vor der dargestellten Anordnung in einer Pollinie. Aus dem Verlauf der Ebenen 40, 42 ist ersichtlich, daß in der Mittelstellung des ersten Gelenkvierecks, die in der Figur dargestellt ist, die Parallelogrammarme 24, 28 im wesentlichen parallel zueinander verlaufen.

Mit dem Sitzträger 32 ist in seinem hinteren, oberen Bereich eine Rückenlehne 44 in ansich bekannter Art verbunden, im Verbindungsbereich kann beispielsweise (nicht dargestellt) ein Gelenkbeschlag für die Winkeleinstellung der Rückenlehne 44 gegenüber dem Sitzträger 32 vorgesehen sein. Wie dargestellt, befindet sich der Sitzträger 32 im wesentlichen oberhalb der Sitzschiene 20.

Etwas oberhalb der Mitte der Verbindungsstrecke zwischen den Achsen 34, 36 ist eine Schwenkachse 46 am Sitzträger 32 angeordnet, sie ist mit einer Kissenschale 48 verbunden, die ein Sitzkissen 50 trägt. In ihrem vorderen Bereich ist die Kissenschale 48 über je ein Gelenkhebelpaar 52, 54 an der Sitzschiene 20 angelenkt. Der obere Hebel 52 des Gelenkhebelpaars ist über eine Achse 56 an der Kissenschale 48 angelenkt, die beiden Hebel 52, 54 sind durch eine gemeinsame Achse 58 gelenkverbunden, der untere Hebel 54 ist über eine einstellbare Achse 60, die im gezeigten Ausführungsbeispiel mit der Achse 26 aus Vereinfachungsgründen (aber nicht notwendigerweise) zusammenfällt, verbunden. Die Achsen 56 bis 60 und die Schwenkachse 46 bilden die Gelenkpunkte eines zweiten Gelenkvierecks, es dient zur Einstellung der Höhe der Vorderkante des Sitzkissens 50. Hierzu ist mit dem unteren Hebel 54 eine Verstellschwinge 62 drehfest verbunden, die wiederum durch ein (nicht dargestelltes) Antriebsorgan innerhalb ihres Winkelbereichs winkelverstellt werden kann. Bei einer Verstellung wird das Sitzkissen 50 um die Schwenkachse 46 seiner Kissenschale 48 neigungsverstellt.

Die Achsen 56, 58 der beiden seitlichen, oberen Hebel jedes Gelenkhebelpaares liegen auf einer Ebene 64, die in der gezeigten, mittleren Höhenlage der Sitzverstellung ebenfalls ungefähr durch die genannte Pollinie verläuft. Anders ausgedrückt steht der obere Heben 52 im genannten Einstellzustand im wesentlichen parallel zu den beiden Parallelogrammarmen 24, 28. Auch hat der obere Hebel 52 eine Länge, die im wesentlichen der Länge der Parallelogrammarme 24, 28 entspricht.

Die Schwenkachse 46 befindet sich geringfügig vor und unterhalb der Vorderkante der Rückenlehne 44. Weiterhin beträgt ihr Abstand von der Hinterkante des Sitzkissens 50 fünfundzwanzig Prozent der Gesamtlänge des Sitzkissens.

Unter dem Begriff "Kissenschale 48" wird jegliche beliebige Tragkonstruktion für das eigentliche Sitzkissen 50 verstanden. Das Sitzkissen 50 ist selbst nur der weiche Körper, insbesondere Polsterkörper, der eine mechanische Unterstützung, eben durch die Kissenschale 48, benötigt. Die Kissenschale 48 kann als Unterstützungsgitter, -tragwerk usw. ausgeführt sein. Im gleich allgemeinen Sinn ist auch der Begriff "Sitzträger" zu verstehen. Der Sitzträger ist dadurch definiert, daß er die Rückenlehne 44 die Schwenkachse 46 aufnehmen bzw. tragen kann.

## Patentansprüche

1. Fahrzeugsitz mit einem Sitzträger (32), der (a) beidseitig über je einen vorderen und einen hinteren Parallelogrammarm (24, 28) mit einer Sitzschiene (20) einer Längsführung gelenkverbunden ist, wobei einem Gelenk (30) eines Parallelogrammarmes (28) eine Einstellvorrichtung für die Höhe des Sitzträgers (32) zugeordnet ist, und (b) eine Rückenlehne (44) trägt dadurch gekennzeichnet, daß der Fahrzeugsitz eine ein Sitzkissen (50) tragende Kissenschale (48) aufweist, die einerseits um eine quer zur Verschieberichtung (22) der Längsführung verlaufende Schwenkachse (46) mit dem Sitzträger (32) gelenkverbunden ist und andererseits im Bereich ihrer Vorderkante beidseitig über je ein Gelenkhebelpaar (52, 54) mit der Sitzschiene (20) gelenkverbunden ist, wobei einem Gelenk (60) des Hebelpaares (52, 54) eine Einstellvorrichtung für die Höhe der Sitzvorderkante zugeordnet ist.

2. Fahrzeugsitz nach Anspruch 1, dadurch gekennzeichnet, daß bei mittlerer Höheneinstellung des Sitzträgers (32) die Achsen (26, 34) des vorderen Parallelogrammarms (24) und die Achsen (30, 36) des hinteren Parallelogrammarms (28) auf Ebenen (40, 42) liegen, die sich unterhalb und vor dem Fahrzeugsitz in einer Pollinie schneiden.

3. Fahrzeugsitz nach Anspruch 2, dadurch gekennzeichnet, daß Achsen (56, 58) der oberen Hebel (52) der Gelenkhebelpaare (52, 54) auf einer Ebene (64) liegen, die bei mittlerer Höheneinstellung ebenfalls im wesentlichen durch die Pollinie verläuft.

4. Fahrzeugsitz nach Anspruch 1, dadurch gekennzeichnet, daß die Schwenkachse (46) sich in unmittelbarer Nähe und unterhalb der Vorderfläche der Rückenlehne (44) befindet.

5. Fahrzeugsitz nach Anspruch 1, dadurch gekennzeichnet, daß die Parallelogrammarme (24, 28) und vorzugsweise auch der obere Hebel (52) im wesentlichen gleichlang sind.

6. Fahrzeugsitz nach Anspruch 1, dadurch gekennzeichnet, daß die Einstellvorrichtungen an den Achsen (30, 60), die an der Sitzschiene (20) vorgesehen sind, ausgeführt sind.

7. Fahrzeugsitz nach Anspruch 1, dadurch gekennzeichnet, daß er einen mechanischen Antrieb für die Längsverstellung der Sitzschiene im Sinne des Pfeils (22), für die Winkelstellung des hinteren Parallelogrammarms (28) und die Winkelstellung des unteren Hebels (54) aufweist.

8. Fahrzeugsitz nach Anspruch 1, dadurch gekennzeichnet, daß der Antrieb über eine Handbetätigungsvorrichtung erfolgt und daß vorzugsweise anhebende Federn vorgesehen sind, die die Verstellrichtung mit dem größeren Antriebsenergiebedarf unterstützt.

## Claims

1. Vehicle seat with a seat support (32) which (a) is hinge fitted on both sides via in each case a forward and a rear parallelogram-arm (24, 26) to a seat rail (20) of a longitudinal guide, wherein a hinge (30) of a parallelogram-arm (28) is equipped with an adjustment device for the height of the seat carrier (32), and (b) carries a back of seat (44), characterized in that the vehicle seat comprises a cushion support (48) carrying the seat cushion (50) which cushion support is on one hand hinge jointed to the seat support (32) around a swivel axis (46) running oblique to the direction of displacement of the longitudinal guide and on the other hand is hinge jointed in the region of it's forward edge on both sides via in each case a pair of articulated levers (52, 54) to the seat rail (20), whereby one joint (60) of the pair of articulated levers (52, 54) comprises an adjustment device for the height of the forward edge of the seat.

2. Vehicle seat in accordance with claim 1, characterized in that in the middle position of adjustment of the height of the seat support (32) the axles (26, 34) of the forward parallelogram-arm (24) and the axles (30, 36) of the rear parallelogram-arm (28) are positioned on planes (40, 42), which intersect below and in front of the vehicle seat in a pole line.

3. Vehicle seat in accordance with claim 2, characterized in that the axles (56, 58) of the upper levers (52) of the pairs of articulated levers (52, 54) are situated in a plane (64) which in the middle position of the height adjustment runs essentially through the pole line, too.

4. Vehicle seat in accordance with claim 1, characterized in that the swivel axis (46) is arranged in the immediate vicinity and below the front face of the back of seat (44).

5. Vehicle seat in accordance with claim 1, characterized in that the two parallelogram-arms (24, 28) and preferably also the upper lever (52) have essentially equal length.

6. Vehicle seat in accordance with claim 1, characterized in that the adjustment devices are arranged at the axles (30, 60) which are located at the seat rail (20).

7. Vehicle seat in accordance with claim 1, characterized in that the vehicle seat comprises a mechanical drive for the longitudinal positioning of the seat rail in the sense of arrow (22), for the angle adjustment of the rear parallelogram-arm (28) and the angle adjustment of the lower lever (54).

8. Vehicle seat in accordance with claim 1, characterized in that the drive is effected by a hand operated device, and in that preferably lifting springs are provided which support the very direction of adjustment, which needs the higher driving force.

## Revendications

1. Siège de véhicule avec un support de siège (32), qui (a) est lié des deux cotés par un bras avant du parallélogramme et un bras arrière du parallélogramme avec une glissière de siège (20) d'un guidage longitudinal, un dispositif d'ajustage pour régler la hauteur du support de siège (32) étant associé à une articulation d'un des bras du parallélogramme et (b) qui porte un dossier (44), caractérisé en ce que le siège du véhicule comporte une cuvette de coussin (48) portant le coussin (50), cuvette qui est, d'une part, liée au support de siège (32) par un assemblage à rotule axée sur un pivot se déplaçant obliquement par rapport à la direction de translation (22) du guidage longitudinal et qui est, d'autre part, liée par un assemblage a rotule dans la partie avant des deux cotés et dans chaque cas par une paire de leviers articulés (52,54) à la glissière du siège (20), un dispositif d'ajustage de la hauteur de la partie avant du siège étant associé a l'une des articulations (60) des paires de leviers articulés (52,54).

2. Siège de véhicule selon la revendication 1, caractérisé en ce que, en position intermédiaire de la hauteur du support de siège (32), les arbres (26,34) du bras avant du parallélogramme (24) et les arbres (30,36) du bras arrière du parallélogramme se trouvent dans des plans (40,42) qui se coupent dans une ligne des pôles a l'avant et sous le siège du véhicule.

3. Siège de véhicule selon la revendication 2 caractérisé en ce que les arbres (56,58) des leviers supérieurs (52) des paires de leviers articulés (52,54) sont situés dans un plan (64) qui, en position intermédiaire d'ajustage de hauteur, s'étend lui-aussi dans la ligne des pôles.

4. Siège de véhicule selon la revendication 1, caractérisé en ce que le pivot (46) se trouve tout près de et sous la face avant du dossier(44).

5. Siège de véhicule selon la revendication 1, caractérisé en ce que les bras du parallélogramme (24,28) et particulièrement aussi le levier supérieur (52) ont la même longueur.

6. Siège de véhicule selon la revendication 1, caractérisé en ce que les dispositifs d'ajustage sont attaches aux arbres (30,60) reliés a la glissière du siège (20).

7. Siège de véhicule selon la revendication 1, caractérisé en ce qu'il comporte un mécanisme de commande pour le mouvement de translation de la glissière du siège (20) en direction de la flèche (22), pour l'ajustage de l'angle du bras arrière du parallélogramme (28) et pour l'ajustage de l'angle du levier articulé inférieur (54).

8. Siège de véhicule selon la revendication 1, caractérisé en ce que l'entrainement est effectue par un mécanisme à main et en ce qu'on a particulièrement prévu des ressorts de soulèvement, qui soutiennent la direction d'ajustage avec la demande de force plus élevée.
